Europäisches Patentamt

European Patent Office

Office européen des brevets

(11) Veröffentlichungsnummer: **0 246 477**
**B1**

(12) **EUROPÄISCHE PATENTSCHRIFT**

(45) Veröffentlichungstag der Patentschrift: **06.06.90**

(51) Int. Cl.⁵: **B 27 K 3/50**

(21) Anmeldenummer: **87106365.7**

(22) Anmeldetag: **30.04.87**

(54) Mittel oder Konzentrat zum Konservieren von Holz und Holzwerkstoffen.

(30) Priorität: **22.05.86 DE 3617250**

(43) Veröffentlichungstag der Anmeldung:
**25.11.87 Patentblatt 87/48**

(45) Bekanntmachung des Hinweises auf die
Patenterteilung:
**06.06.90 Patentblatt 90/23**

(84) Benannte Vertragsstaaten:
**AT BE CH DE ES FR GB GR IT LI LU NL SE**

(56) Entgegenhaltungen:
**EP-A-0 008 606**
**DE-B-2 644 077**
**US-A-4 166 725**

**TIPS - Oct 1985, pages 396-400**

**CLIN and EXPER - Theory and Practice, A9(586)
853-872 (1987)**

**Die Akte enthält technische Angaben, die nach
dem Eingang der Anmeldung eingereicht
wurden und die nicht in dieser Patentschrift
enthalten sind.**

(73) Patentinhaber: **DESOWAG Materialschutz
GmbH
Rossstrasse 76 Postfach 32 02 20
D-4000 Düsseldorf 30 (DE)**

(72) Erfinder: **Grüning, Rainer, Dr.
Franz-Hitze Strasse 14
D-4150 Krefeld 1 (DE)**
Erfinder: **Hiller, Johannes-Christian, Dr.
Vinhovenweg 50
D-4044 Kaarst 2 (DE)**

(74) Vertreter: **Seiler, Siegfried
Langhansstrasse 6
D-5650 Solingen 11 (DE)**

**Beschreibung**

Die vorliegende Erfindung betrifft ein Mittel oder Konzentrat zum Konservieren von Holz und Holzwerkstoffen enthaltend 0,1—40 Gew.-% mindestens eines bioziden Carbamates, Phosphorsäureesters, Dithiophosphorsäureesters, Thiophosphorsäureesters, Thionophosphorsäureesters oder eines deren Derivaten oder Mischungen von einem oder mehreren dieser Biozide untereinander oder mit einem oder mehreren anderen organischen oder metallorganischen Bioziden und mehr als 45 Gew.-% eines organisch-chemischen Lösungsmittels oder organisch-chemischen Lösungsmittelgemisches, vorzugsweise eines organisch-chemischen, schwerflüchtigen Lösungsmittels oder Lösungsmittelgemisches, mit einem Flammpunkt über 30°C, sowie ggf. mindestens einem weiteren fungiziden und/oder insektiziden Wirkstoff, mindestens einem Harz, Kunstharz, Fixierungsmittel und/oder Weichmacher, einem Zusatzmittel und/oder Verarbeitungshilfsmittel, wobei das Holzschutzmittel bezogen auf den bioziden Gesamtanteil an Carbamat, Phosphorsäureester, Thiophosphorsäureester, Dithiophosphorsäureester, Thionophosphorsäureester oder eines bioziden Derivates derselben, mindestens einen organischen Borsäureester in einem bestimmten Gewichtsverhältnis enthält.

Aus der US—A—4 166 725 ist es bekannt, ein Treibstoffgemisch mit einer Siedetemperatur von 70°F bis 750°F, bestehend aus Kohlenwasserstoffgemischen durch die Verwendung eines Gemisches bestimmter Borsäureester in Gewichtsmengen von 0,0005 bis 0,05 Gew.-% und 0,0005 bis 0,05 Gew.-% eines bestimmten Diamins gegen die Zersetzung durch gewisse Pilze und Bakterien zu schützen.

Würde man jedoch die in der US—A—4 166 725 genannten Diamine in Holzkonservierungsmittel gemeinsam auf den zu stabilisierenden bioziden Carbamaten, Phosphorsäureester, Thiophosphorsäureestern, Dithiophosphorsäureestern und/oder Thionophosphorsäureestern einsetzen, so tritt bei einer Kombination der Carbamate, Phosphorsäureester, Thiophosphorsäureester und dgl. mit Amin oder Diamin keine Stabilisierung, sondern eine Aufspaltung und Zersetzung und ein Wirkungsabfall dieser Verbindungen ein.

Es ist bereits bekannt, Mittel zum Konservieren von Holz und Holzwerkstoffen, bestehend aus einem Carbamat und Phosphorsäureester, Dithiophosphorsäureester, Thiophosphorsäureester, Thionophosphorsäureester untereinander oder mit einem oder mehreren Fungiziden und einem organisch-chemischen Lösungsmittel sowie ggf. mindestens einem weiteren fungiziden und/oder insektiziden Wirkstoff, mindestens einem Harz oder Kunstharz, Fixierungsmittel, Weichmacher, Zusatzmittel und/oder Verarbeitungshilfsmittel einzusetzen (vgl. DE—AS—26 44 077).

Diese Holzkonservierungsmittel sind hochwirksam. Die Lagerstabilität dieser Holzkonservierungsmittel wird jedoch dann beeinträchtigt, wenn Wasser, Verunreinigungen oder andere organische Verbindungen im Mittel oder Konzentrat vorhanden sind. Dabei reichen bereits relativ kleine Gewichtsmengen, z.B. Wassermengen über 0,05 Gew.-%, aus, um die Lagerstabilität zu beinträchtigen.

Ziel und Aufgabe der vorliegenden Erfindung war es daher, ein Holzschutzmittel und Holzschutzmittelkonzentrat auf der Basis eines bioziden Carbamates, Phosphorsäureesters, Thiophosphorsäureesters, Dithiophosphorsäureesters oder Thionophosphorsäureesters zu finden, bei dem die Stabilität und somit auch die Wirksamkeit des Mittels verbessert ist. Insbesondere sollten Wassermengen bis zu 1 Gew.-%, die Stabilität dieser Biozide im Holzkonservierungsmittel nicht beeinträchtigen können und/oder andere Verbindungen im Mittel nicht zu einem Wirkungsabfall führen.

Erfindungsgemäß wurde festgestellt, daß diesen Zielen und Aufgaben ein Mittel oder Konzentrat zum Konservieren von Holz und Holzwerkstoffen enthaltend 0,1—40 Gew.-% mindestens eines bioziden Carbamates, Phosphorsäureesters, Dithiophosphorsäureesters, Thiophosphorsäureesters, Thionophosphorsäureesters oder eines deren Derivaten oder Mischungen von einem oder mehreren dieser Biozide untereinander oder mit einem oder mehreren anderen organischen oder metallorganischen Bioziden und mehr als 45 Gew.-% eines organisch-chemischen Lösungsmittels oder organisch-chemischen Lösungsmittelgemisches, vorzugsweise eines organisch-chemischen, schwerflüchtigen Lösungsmittels oder Lösungsmittelgemisches, mit einem Flammpunkt über 30°C sowie ggf. einem weiteren fungiziden und/oder insektiziden Wirkstoff, einem Harz, Kunstharz, Fixierungsmittel und/oder Weichmacher, einem Zusatzmittel und/oder einem Verarbeitungshilfsmittel, gerecht wird. Gemäß der Erfindung enthält das Holzschutzmittel oder Konzentrat, begozen auf den bioziden Gesamtanteil an Carbamat, Phosphorsäureester, Thiophosphorsäureester, Dithiophosphorsäureester, Thionophosphorsäureester oder eines bioziden Derivates derselnben, mindestens einen organischen Borsäureester in einem Gewichtsverhältnis von 1:0,5 bis 1:0,01, vorzugsweise 1:0,2 bis 1:0,05, wobei der Borsäureester oder das Borsäureestergemisch gemäß der Erfindung in dem organisch-chemischen Lösungsmittel oder Lösungsmittelgemisch löslich oder darin gelöst ist.

Als organische Borsäureester sind bevorzugt Tri-m,p-cresylborat, Triphenylborat, Triethylborat, Tributylborat, Tripropylborat, Trihexylenglycolbiborat, 2,2'(1-methyltrimethylendioxy)bis-(4-methyl-1,3,2-dioxaborinan) und/oder 2,2'-oxybis(4,4,6-trimethyl-1,3,2-dioxaborinan) im Konservierungsmittel oder Konzentrat enthalten.

Erfindungsgemäß wurde festgestellt, daß in der gewählten Holzschutzmittelzusammensetzung die Zersetzungsgeschwindigkeit der genannten Carbamate und Phosphorsäureester erheblich vermindert oder verhindert wird und daß in der erfindungsgemäßen Kombination die eingesetzen Borsäureester stabilisierend wirken, in pH-Abhängigkeit der Wirkstoffe in der Zusammensetzung. Obgleich die Borsäureester selbst meist biozid sind, wirken die Borsäureester der eingesetzen sehr niedrigen Konzentration nicht in ihrer Wirkung als Insektizid oder Fungizid, sondern als Stabilisator.

Nach einer bevorzugten Ausführungsform der Erfindung enthält das anwendungsfertige Mittel zum Konservieren von Holz und Holzwerkstoffen 0,1—5 Gew.-% mindestens eines bioziden Carbamates, Phosphorsäureesters, Dithiophosphorsäureesters, Thiophosphorsäureesters, Thionophosphorsäureesters oder eines deren Derivaten oder Mischungen von einem oder mehreren dieser Biozide untereinander oder mit einem oder mehreren anderen organischen oder metallorganischen Bioziden und mehr als 45 Gew.-% eines organisch-chemischen Lösungsmittels oder organisch-chemischen Lösungsmittelgemisches, vorzugsweise eines organisch-chemischen, schwerflüchtigen Lösungsmittels oder Lösungsmittelgemisches, mit einem Flammpunkt über 30°C, sowie ggf. mindestens einen fungiziden und/ oder insektiziden Wirkstoff, einem Harz, Kunstharz, Fixierungsmittel und/oder einem Weichmacher, einem Zusatzmittel und/oder einem Verarbeitungshilfsmittel sowie bezogen auf den bioziden Gesamtanteil an Carbamat, Phosphorsäureester, Thiophosphorsäureester, Dithiophosphorsäureester, Thionophosphorsäureester oder eines bioziden Derivates derselben, mindestens einen organischen in dem organisch-chemischen Lösungsmittel oder Lösungsmittelgemisch löslichen Borsäureester in einem Gewichtsverhältnis von 1:0,5 bis 1:0,01, vorzugsweise 1:0,2 bis 1:0,05, und 0 bis 8 Gew.-%, vorzugsweise 0,1 bis 5 Gew.-%, eines in dem organisch-chemischen Lösungsmittel oder Lösungsmittelgemisch löslichen Fungizides oder Fungizidgemisches, vorzugsweise N,N-Dimethyl-N'-phenyl-N'-(fluordichlormethylthio)sulfamid, N,N-Dimethyl-N'-tolyl-N'-(dichlorfluormethylthio)sulfamid, N-Cyclohexyl-N-methoxy-2,5-dimethylfuran-3-carbonsäureamid, Tris(N-Cyclohexyl-Diazeniumdioxi)-Aluminium und/oder fungizide zinnorganische Verbindunge.

Als organische schwerflüchtige Lösungsmittel werden vorteilhaft wasserunlösliche oder kaum wasserlösliche Lösungsmittel bzw. Lösungsmittelgemische eingesetzt. Bevorzugt gelangen ölige oder mineralölhaltige oder ölartige Lösungsmittel mit einer Verdunstungszahl über 35 und einem Flammpunkt oberhalb 30°C, vorzugsweise oberhalb 55°C, zum Einsatz.

Als derartige Lösungsmittel werden entsprechende Mineralöle oder deren Aromatenfraktionen oder mineralölhaltige Lösungsmittelgemische, vorzugsweise Testbenzin, Petroleum, Gasöl und/oder Alkylbenzole usw. verwendet.

In einer Ausführungsform wurden auch hochsiedende Gemische von aromatischen und/oder aliphatischen Kohlenwasserstoffen mit einem Siedebereich von 160 bis 350°C, vorzugsweise von 180 bis 220°C und/oder Spindelöl und/oder Monochlornaphthalin verwendet. Bevorzugt werden auch solche Lösemittel oder Lösemittelgemische verwendet, die eine Oberflächenspannung von 16 bis 37 mN/m, vorzugsweise 17 bis 35 mN/m, (gemessen bei 20°C) aufweisen und/oder die eine elektrische Leitfähigkeit von $10^{-10}$ bis $10^{-16}$ S/m (Siemens pro Meter) besitzen.

Die organischen schwerflüchtigen öligen oder ölartigen Lösungsmittel mit einer Verdunstungszahl über 35 und einem Flammpunkt oberhalb 30°C, vorzugsweise oberhalb 45°C, können teilweise durch leicht- oder mittelflüchtige organisch-chemische Lösungsmittelgemische ebenfalls eine Verdunstungszahl über 35 und einen Flammpunkt oberhalb 30°C, vorzugsweise oberhalb 45°C, aufweist und daß das Insektizid in diesem Lösungsmittelgemisch löslich ist.

Nach einer bevorzugten Ausführungsform enthält das Konservierungsmittel 0,1—12 Gew.-%, vorzugsweise 1—6 Gew.-%, mindestens eines Fixierungsmittels, Weichmachers und/oder öllöslichen Kunstharzes, vorzugsweise Alkydharz und/oder trocknenden pflanzlichen Öles.

Als Fixierungsmittel bzw. Weichmacher werden vor allem solche Verbindungen eingesetzt, die zusätzlich eine Verflüchtigung der Wirkstoffe und/oder eine Kristallisation bzw. Ausfällung verhindern sollen. Vorzugsweise werden

a) Weichmacher, z.B. Alkyl-, Aryl-, oder Aralkylphthalate, vorzugsweise Dibutyl-, Dioctyl- und Benzylbutylphthalate, Alkylphosphate bzw. Phosphorsäureester, vorzugsweise Tributylphosphat, Adipate, vorzugsweise Di-(2-äthylhexyl)-adipat, Stearate und Oleate, z.B. Alkylstearate oder Alkyloleate, vorzugsweise Butyloleat, Butylstearat oder Amylstearat, Bis-(dimethylbenzyl)äther, p-Toluolsulfonsäureäthylester, Glycerinester, Glycerinäther oder höhermolekulare Glykoläther und/oder

b) Öle, z.B. Leinöl, Rizinusöl, Tallöl und deren Ester und/oder

c) Fixierungsmittel auf der Basis von Ketonen und/oder Polyvinylalkyläthern, z.B. Ketone mit Alkyl-, Aryl- oder Aralkylgruppen, vorzugsweise Benzophenon, Äthylbenzophenon; Polyvinylalkyläther, vorzugsweise Polyvinylmethyläther,

d) Harze und/oder Kunstharze, z.B. Kohlenwasserstoffharze, Acrylate, vorzugsweise Alkydharze verwendet.

Nach einer anderen bevorzugten Ausführungsform enthält das im Holzkonservierungsmittel enthaltene Biozidgemisch zusätzlich noch ein Fungizid, das aus Methylen-bis-thiocyanat, 3,4,5,6-Tetrachlor-Phthalsäuredinitril, Jodpropargylalkohol, 1-(4-Chlorphenoxyl)-3,3-dimethyl-1-(1-H-1,2,4-triazol-1-yl)-2-butanon), Tris(N-Cyclohexyl-Diazeniumdioxi)-Aluminium, fungiziden Tributylzinnverbindungen, 2,6-Dimethyl-4-tridecylmorpholin und/oder 1-2-(2,4-dichlorophenyl)-1,3-dioxolan-2-ylmethyl-1-H-1,2,4-triazol und/oder N-(Dichlorfluormethylthio)-3,6-endomeethylen-Delta 4-tetrahydrophthalimid, vorzugsweise aus 2-Methoxycarbonyl-aminobenzimidazol und/oder 2,5-Dimethyl-N-cyclohexyl-N-methoxy-3-furancarbonsäureamid, besteht oder ein oder mehrere der Fungizide oder Fungizidgemische, enthält. Bei diesen Fungiziden oder Fungizidkombinationen werden unter Verwendung des

3

erfindungsgemäßen Holzschutzmittels oder Holzkonservierungsmittels neben hohen insektiziden Wirkungen besonders gute Wirkungen zur Verhinderung des Befalles holzzerstörender Pflanzen, insbesondere Holzzerstörender Pilze und dgl. erzielt. Zusätzlich zu dem im Mittel oder Konzentrat eingesetzten bioziden Carbamat, Phosphorsäureester, Dithiophosphorsäureester, Thiophosphorsäureester, Thionophosphorsäureester (oder einem deren Derivate oder Mischungen von einem oder mehreren dieser Biozide untereinander oder mit einem oder mehreren anderen organischen oder metallorganischen Bioziden) können auch Pyrethroide in Gewichtsmengen bis zu 2 Gew.-% (bei Konzentraten), bei anwendungsfertigen Kolzkonservierungsmittel bis zu 0,2 Gew.-% mitverwendet werden.

Nach einer bevorzugten Ausführungsform enthält das erfindungsgemäße Konzentrat zum Konservieren von Holz und Holzwerkstoffen 5—35 Gew.-% mindestens eines bioziden Carbamates, Phosphorsäureesters, Dithiophosphorsäureesters, Thiophosphorsäureesters, Thionophosphorsäureesters oder eines deren Derivaten oder Mischungen von einem oder mehreren dieser Biozide untereinander oder mit einem oder mehreren anderen organischen oder metallorganischen Bioziden und mehr als 45 Gew.-% eines organisch-chemischen Lösungsmittels oder organisch-chemischen Lösungsmittelgemisches, vorzugsweise eines organisch-chemischen, schwerflüchtigen Lösungsmittels oder Lösungsmittelgemisches, mit einem Flammpunkt über 30°C, sowie ggf. mindestens einen fungiziden und/oder insektiziden Wirkstoff, einem Harz, Kunstharz, Fixierungsmittel und/oder einem Weichmacher, einem Zusatzmittel und/oder einem Verarbeitungshilfsmittel sowie bezogen auf den bioziden Gesamtanteil an Carbamat, Phosphorsäureester, Thiophosphorsäureester, Dithiophosphorsäureester, Thionophosphorsäureester oder eines bioziden Derivatives derselben, mindestens einen organischen in dem organisch-chemischen Lösungsmittel oder Lösungsmittelgemisch löslichen Borsäureester in einem Gewichtsverhältnis von 1:0,5 bis 1:0,01, vorzugsweise 1:0,2 bis 1:0,05, und 35—0 Gew.-%, vorzugsweise 30—5 Gew.-%, eines in dem organisch-chemischen Lösungsmittel oder Lösungsmittelgemisch löslichen Fungizides oder Fungizidgemisches, vorzugsweise N,N-Dimethyl-N'-phenyl-N'-(fluordichlormethylthio)sulfamid, N,N-Dimethyl-N'-tolyl-N'-(dichlorfluormethylthio)sulfamid, N-Cyclohexyl-N-methoxy-2,5-dimethylfuran-3-carbonsäureamid, Tris(N-Cyclohexyl-Diazeniumdioxi)-Aluminium und/oder fungizide zinnorganische Verbindungen. Aus dem Konzentrat kann durch Zugabe der organisch-chemischen Lösungsmittel oder Lösungsmittelgemische und/oder der Zusatzmittel und dgl. das anwendungsfertige Holzschutzmittel hergestellt werden.

Die Erfindung betrifft weiterhin ein Verfahren zur Herstellung des Mittels oder Konzentrates zum Konservieren von Holz und Holzwerkstoffen durch Vermischen der Bestandteile, wobei das Biozid oder Biozidgemisch bestehend aus mindestens einem bioziden Carbamat, Phosphorsäureester, Dithiophosphorsäureester, Thiophosphorsäureester, Thionophosphorsäureester oder einem deren Derivate oder Mischungen von einem oder mehreren dieser Biozide untereinander oder mit einem oder mehreren anderen organischen der metallorganischen Bioziden und ein organisch-chemisches Lösungsmittel oder organisch-chemisches Lösungsmittelgemisch, vorzugsweise ein organisch-chemisches, schwerflüchtiges Lösungsmittel oder Lösungsmittelgemisch mit einem Flammpunkt über 30°C, zusammen mit mindestens einem organischen Borsäureester bei Temperaturen von 283 K bis 343 K, vorzugsweise 293 K bis 323 K, und bei Drücken von 53,32 kPa bis 113,32 kPa vorzugsweise 79,99 kPa bis 105,32 kPa in Anwesenheit oder in Anwesenheit der übrigen Stoffe oder Bestandteile dieser Stoffe unter Umrühren behandelt werden, bis eine Lösung entsteht, wobei der Lösung nachfolgend die übrigen Stoffe zugefügt werden.

Das organisch-chemische Lösungsmittel oder organisch-chemische Lösungsmittelgemisch,, vorzugsweise ein organisch-chemisches, schwerflüchtiges Lösungsmittel oder Lösungsmittelgemisch mit einem Flammpunkt über 30°C, wird gemäß einer vorzugsweisen Ausführungsform zusammen mit mindestens einem organischen Borsäureester vorgelegt, bei Temperaturen von 283 K bis 343 K, vorzugsweise 293 K bis 323 K, und bei Drücken von 53,32 kPa bis 113,32 kPa, vorzugsweise 79,99 kPa bis 105 32 kPa, in Anwesenheit oder in Anwesenheit der übrigen Stoffe oder Bestandteile dieser Stoffe unter Umrühren behandelt, bis eine Lösung entsteht. Danach werden Harz-, Kunstharzbindemittel, Weichmacher und/oder Fixierungsmittel unter Umrühren zugegeben und nachfolgend die Biozide und gegebenenfalls andere Wirkstoffe sowie Zusatzmittel und/oder Verarbeitungshilfsmittel bei Temperaturen von 283 K bis 333 K, vorzugsweise 290 K bis 320 K, unter Umrühren zugefügt.

Beispiele

1. 2-Isobutylphenyl-N-methylcarbamate — 2 %
   N,N-Dimethyl-N-phenyl-N'-(fluordichlormethylthio)sulfamid — 0,8%
   N,N-Dimethyl-N'-tolyl-N'-(dichlorfluormethylthio)sulfamid — 0,8%
   Tri-hexylenglycolbiborat — 0,1%
   Alkydharz, langölig — 4,0%
   Methoxypropylacetat — 7,0%
   Mineralöl, Flammpunkt über 55°C, Siedebereich: 180—210°C (Aliphaten- und Aromatengemisch), vorzugsweise Testbenzin — 85,3%

   100,0%

2. N-Cyclohexyl-N-methoxy-2,5-dimethyl-furan-3-carbonsäureamid — 2,00%
   O,O-Diäthyl-O-(α-cyanbenzyliden-amino)thionophosphat — 1,50%
   Alkydharz — 11,00%
   Tri-hexylenglycolbiborat — 0,20%
   Trockenstoffe — 0,10%
   Duftstoffe — 0,05%
   Mineralöl, Flammpunkt über 55°C, Siedebereich: 180—210°C (Aliphaten- und Aromatengemisch, mit einem Aromatengehalt von vorzugsweise 17 Gew.-%, bezogen auf 100 Gew.-% Mineralöl) — 85,15%

   100,00%

3. 2-Isobutylphenyl-N-methylcarbamat — 2,0%
   Borsäureester bestehend aus 2,2'(1-methyltrimethylen-dioxy)bis-(4-methyl-1,3,2-dioxaborinan) und/oder 2,2'-oxybis(4,4,6-trimethyl-1,3,2-dioxaborinan) — 0,2%
   Dibutylphthalat — 4,0%
   organisch-chemisches, wasserunlösliches Lösungsmittelgemisch — 93,8%

   100,0%

4. 2-Isobutylphenyl-N-methylcarbamat — 2,0%
   Borsäureester bestehend aus einem Gemisch von 2,2'(1-methyltrimethylen-dioxy)bis-(4-methyl-1,3,2-dioxaborinan) und 2,2'-oxybis(4,4,6-trimethyl-1,3,2-dioxaborinan) — 0,3%
   Dibutylphthalat — 4,0%
   organisch-chemisches, wasserunlösliches Lösungsmittelgemisch — 93,7%

   100,0%

| 5. (Konzentrat) | |
|---|---|
| 2-Isobutylphenyl-N-methylcarbamat | 22,0% |
| Borsäureester bestehend aus einem | |
| Gemisch von 2,2'(1-methyltrimethylen- | |
| dioxy) bis-(4-methyl-1,3,2-dioxaborinan) | |
| und 2,2'-oxybis(4,4,6-trimethyl- | |
| 1,3,2-dioxaborinan) | 5,0% |
| Dibutylphthalat | 14,0% |
| organisch-chemisches, wasserun- | |
| lösliches Lösungsmittelgemisch | 59,0% |
| | 100,0% |

| 6. 2-Isopropoxyphenyl-N-methylcarbamat | 1,0% |
|---|---|
| Borsäureester bestehend aus einem | |
| Gemisch von 2,2'(1-methyltrimethylen- | |
| dioxy)bis-(4-methyl-1,3,2-dioxaborinan) | |
| und 2,2'-oxybis(4,4,6-trimethyl- | |
| 1,3,2-dioxaborinan) | 0,2% |
| Dibutylphthalat | 4,0% |
| organisch-chemisches, wasserun- | |
| lösliches Lösungsmittelgemisch | 94,8% |
| | 100,0% |

| 7. O,O-Diäthyl-O-(α-cyanbenzyliden- | |
|---|---|
| amino)thionophosphat | 1,0% |
| 2-Isopropoxyphenyl-N-methylcarbamat | 1,0% |
| Borsäureester bestehend aus einem | |
| Gemisch von 2,2'(1-methyltrimethylendioxy) | |
| bis-(4-methyl-1,3,2-dioxaborinan) | |
| und/oder 2,2'-oxybis(4,4,6-trimethyl- | |
| 1,3,2-dioxaborinan) | 0,2% |
| organisch-chemisches, wasserun- | |
| lösliches Lösungsmittelgemisch | 93,8% |
| Dibutylphthalat | 4,0% |
| | 100,0% |

| 8. (Konzentrat) | |
|---|---|
| O,O-Diäthyl-O-(α-cyanbenzyliden- | |
| amino)thionophosphat | 5,0% |
| 2-Isopropoxyphenyl-N-methylcarbamat | 5,0% |
| Borsäureester bestehend aus | |
| 2,2'(1-methyltrimethylendioxy)bis-(4-methyl- | |
| 1,3,2-dioxaborinan) und/oder 2,2'-oxybis | |
| (4,4,6-trimethyl-1,3,2-dioxaborinan) | 1,5% |
| organisch-chemisches, wasserun- | |
| lösliches Lösungsmittelgemisch | 80,5% |
| Dibutylphthalat | 8,0% |
| | 100,0% |

**Patentansprüche**

1. Mittel oder Konzentrat zum Konservieren von Holz und Holzwerkstoffen enthaltend

0,1—40 Gew.-%

mindestens eines bioziden Carbamates, Phosphorsäureesters, Dithiophosphorsäureesters, Thiophosphorsäureesters, Thionophosphorsäureesters oder eines deren Derivaten oder Mischungen von einem oder mehreren dieser Biozide untereinander oder mit einem oder mehreren anderen organischen oder metallorganischen Bioziden und

mehr als 45 Gew.-%

6

eines organisch-chemischen Lösungsmittels oder organisch-chemischen Lösungsmittelgemisches, vorzugsweise eines organisch-chemischen, schwerflüchtigen Lösungsmittels oder Lösungsmittelgemisches, mit einem Flammpunkt über 30°C, sowie ggf. mindestens einem weiteren fungiziden und/oder insektiziden Wirkstoff, mindestens einem Harz, Kunstharz, Fixierungsmittel und/oder Weichmacher, einem Zusatzmittel und/oder einem Verarbeitungshilfsmittel, dadurch gekennzeichnet, daß das Holzschutzmittel bezogen auf den bioziden Gesamtanteil an Carbamat, Phosphorsäureester, Thiophosphorsäureester, Dithiophosphorsäureester, Thionophosphorsäureester oder eines bioziden Derivates derselben, mindestens einen organischen Borsäureester in einem Gewichtsverhältnis von

1:0,5 bis 1:0,01, vorzugsweise
1:0,2 bis 1:0,05,

enthält, wobei der Borsäureester oder das Borsäureestergemisch in dem organisch-chemischen Lösungsmittel oder Lösungsmittelgemisch löslich oder gelöst ist.

2. Mittel oder Konzentrat zum Konservieren von Holz und Holzwerkstoffen nach Anspruch 1, dadurch gekennzeichnet, daß als organische Borsäureester Tri-m,p-cresylborat, Triphenylborat, Triethylborat, Tributylborat, Tripropylborat, Trihexylenglycolbiborat, 2,2'(1-methyltrimethylendioxy)bis-(4-methyl-1,3,2-dioxaborinan) und/oder 2,2'-oxy-bis(4,4,6-trimethyl-1,3,2-dioxaborinan) im Konservierungsmittel enthalten sind.

3. Mittel zum Konservieren von Holz und Holzwerkstoffen nach Ansprüchen 1 bis 2, dadurch gekennzeichnet, daß das Mittel zum Konservieren von Holz und Holzwerkstoffen

0,1—5 Gew.-%

mindestens eines bioziden Carbamates, Phosphorsäureesters, Dithiophosphorsäureesters, Thiophosphorsäureesters, Thionophosphorsäureesters oder eines deren Derivaten oder Mischungen von einem oder mehreren dieser Biozide untereinander oder mit einem oder mehreren anderen organischen oder metallorganischen Bioziden und

mehr als 45 Gew.-%

eines organisch-chemischen Lösungsmittels oder organisch-chemischen Lösungsmittelgemisches, vorzugsweise eines organisch-chemischen, schwerflüchtigen Lösungsmittels oder Lösungsmittelgemisches, mit einem Flammpunkt über 30°C, sowie ggf. mindestens einen fungiziden und/oder insektiziden Wirkstoff, einem Harz, Kunstharz, Fixierungsmittel und/oder einem Weichmacher, einem Zusatzmittel und/oder einem Verarbeitungshilfsmittel sowie bezogen auf den bioziden Gesamtanteil an Carbamat, Phosphorsäureester, Thiophosphorsäureester, Dithiophosphorsäureester, Thionophosphorsäureester oder eines bioziden Derivates derselben, mindestens einen organischen in dem organisch-chemischen Lösungsmittel oder Lösungsmittelgemisch löslichen Borsäureester in einem Gewichtsverhältnis von

1:0,5 bis 1:0,01, vorzugsweise
1:0,2 bis 1:0,05,

und

0 bis 8 Gew.%, vorzugsweise
0,1 bis 5 Gew.-%,

eines in dem organisch-chemischen Lösungsmittel oder Lösungsmittelgemisch löslichen Fungizides oder Fungizidgemisches, vorzugsweise N,N-Dimethyl-N'-phenyl-N'-(fluordichlormethylthio)sulfamid, N,N-Dimethyl-N'-tolyl-N'-(dichlorfluormethylthio)sulfamid, N-Cyclohexyl-N-methoxy-2,5-dimethylfuran-3-carbonsäureamid, Tris(N-Cyclohexyl-Diazeniumdioxi)-Aluminium und/oder fungizide zinnorganische Verbindungen enthält.

4. Mittel zum Konservieren von Holz und Holzwerkstoffen nach einem oder mehreren der Ansprüche 1 bis 3, dadurch gekennzeichnet, daß das Konservierungsmittel

0,1—12 Gew.-%, vorzugsweise
1—6 Gew.-%,

mindestens eines Fixierungsmittels, Weichmachers und/oder öllöslichen Kunstharzes, vorzugsweise Alkydharz und/oder trocknenden pflanzlichen Öles, enthält.

5. Konzentrat nach einem oder mehreren der Ansprüche 1 bis 4, dadurch gekennzeichnet, daß das Konzentrat zum Konservieren von Holz und Holzwerkstoffen

5—35 Gew.-%

mindestens eines bioziden Carbamates, Phosphorsäureesters, Dithiophosphorsäureesters, Thiophosphorsäureesters, Thionophosphorsäureesters oder eines deren Derivaten oder Mischungen von einem oder mehreren dieser Biozide untereinander oder mit einem oder mehreren anderen organischen oder metallorganischen Bioziden und

mehr als 45 Gew.-%

eines organisch-chemischen Lösungsmittels oder organisch-chemischen Lösungsmittelgemisches, vorzugsweise eines organisch-chemischen, schwerflüchtigen Lösungsmittels oder Lösungsmittelgemisches, mit einem Flammpunkt über 30°C, sowie ggf. mindestens einen fungiziden und/oder insektiziden Wirkstoff, einem Harz, Kunstharz, Fixierungsmittel und/oder einem Weichmacher, einem Zusatzmittel und/oder einem Verarbeitungshilfsmittel sowie bezogen auf den bioziden Gesamtanteil an Carbamat, Phosphorsäureester, Thiophosphorsäureester, Dithiophosphorsäureester, Thionophosphorsäureester oder eines bioziden Derivates derselben, mindestens einen organischen in dem organisch-chemischen Lösungsmittel oder Lösungsmittelgemisch löslichen Borsäureester in einem Gewichtsverhältnis von

1:0,5 bis 1:0,01, vorzugsweise
1:0,2 bis 1:0,05,

und

35—0 Gew.-%, vorzugsweise
30—5 Gew.-%,

eines in dem organisch-chemischen Lösungsmittel oder Lösungsmittelgemisch löslichen Fungizides oder Fungizidgemisches, vorzugsweise N,N-Dimethyl-N'-phenyl-N'-(fluordichlormethylthio)sulfamid, N,N-Dimethyl-N'-tolyl-N'-(dichlorfluormethylthio)sulfamid, N-Cyclohexyl-N-methoxy-2,5-dimethylfuran-3-carbonsäureamid, Tris(N-Cyclohexyl-Diazeniumdioxi)-Aluminium und/oder fungizide zinnorganische Verbindungen enthält.

6. Verfahren zur Herstellung des Mittels oder Konzentrates zum Konservieren von Holz und Holzwerkstoffen durch Vermischen der Bestandteile nach Ansprüche 1—5, dadurch gekennzeichnet, daß das Biozid oder Biozidgemisch bestehend aus mindestens einem biozHolz und Holzwerkstoffen durch Vermischen der Bestandteile nach Ansprüche 1—5, dadurch gekennzeichnet, daß das Biozid oder Biozidgemisch bestehend aus mindestens einem biozHolz und Holzwerkstoffen durch Vermischen der Bestandteile nach Ansprüche 1—5, dadurch gekennzeichnet, daß das Biozid oder Biozidgemisch bestehend aus mindestens einem biozHolz Carbamat, Phosphorsäureester, Dithiophosphorsäureester, Thiophosphorsäureester, Thionophosphorsäureester oder einem deren Derivate oder Mischungen von einem oder mehreren dieser Biozide untereinander oder mit einem oder mehreren anderen organischen oder metallorganischen Bioziden und ein organisch-chemisches Lösungsmittel oder organisch-chemisches Lösungsmittelgemisch, vorzugsweise ein organisch-chemisches, schwerflüchtiges Lösungsmittel oder Lösungsmittelgemisch mit einem Flammpunkt über 30°C, zusammen bit mindestens einem organischen Borsäureester bei Temperaturen von

283 K bis 343 K, vorzugsweise
293 K bis 323 K,

und bei Drücken von

53,32 kPa bis 113,32 kPa vorzugsweise
79,99 kPa bis 105,32 kPa

in Anwesenheit oder in Abwesenheit der übrigen Stoffe oder Bestandteile dieser Stoffe unter Umrühren behandelt werden, bis eine Lösung entsteht, wobei der Lösung nachfolgend die übrigen Stoffe zugefügt werden.

7. Verfahren zur Herstellung des Mittels oder Konzentrates zum Konservieren von Holz und Holzwerkstoffen nach Anspruch 6, dadurch gekennzeichnet, daß das organisch-chemische Lösungsmittel oder organisch-chemische Lösungsmittelgemisch, vorzugsweise ein organisch-chemisches, schwerflüchtiges Lösungsmittel oder Lösungsmittelgemisch mit einem Flammpunkt über 30°C, zusammen mit mindestens einem organischen Borsäureester vorgelegt, bei Temperaturen von

283 K bis 343 K, vorzugsweise
293 K bis 323 K,

und bei Drücken von

53,32 kPa bis 113,32 kPa, vorzugsweise
79,99 kPa bis 105,32 kPa,

in Anwesenheit oder in Abwesenheit der übrigen Stoffe oder Bestandteile dieser Stoffe unter Umrühren behandelt werden, bis eine Lösung entsteht und Harz-, Kunstharzbindemittel, Weichmacher und/oder Fixierungsmittel unter Umrühren zugegeben und nachfolgend die Biozide und gegebenenfalls andere Wirkstoffe sowie Zusatzmittel und/oder Verarbeitungshilfsmittel bei Temperaturen von

# EP 0 246 477 B1

283 K bis 333 K, vorzugsweise
290 K bis 320 K,

unter Umrühren zugefügt werden.

**Revendications**

1. Agent ou concentré pour la conservation du bois et des matériaux en bois contenant

0,1—40% en poids

d'au moins un biocide de la classe des carbamates, des esters de l'acide phosphorique, des esters de l'acide dithiophosphorique, des esters de l'acide thiophosphorique, des esters de l'acide thionophosphorique, de leurs dérivés et de leurs mélanges entre eux ou avec un ou plusieurs autres biocides organiques ou métallo-organiques et

plus de 45% en poids

d'un solvant organique ou d'un mélange de solvants organiques, de préférence un solvant organique ou mélange de solvants organiques peu volatil ayant un point d'éclair supérieur à 30°C, ainsi qu'éventuellement au moins un autre agent actif fongicide et/ou insecticide, au moins une résine, une résine synthétique, un agent de fixation et/ou un plastifiant, un additif et/ou un adjuvant de traitement, caractérisé en ce que l'agent protecteur du bois contient, par rapport à la teneur totale en biocide de la classe des carbamates, des esters de l'acide phosphorique, des esters de l'acide thiophosphorique, des esters de l'acide dithiophosphorique, des esters de l'acide thionophosphorique et des dérivés biocides de ceux-ci, au moins un ester organique de l'acide borique en un rapport pondéral de

1:0,5 à 1:0,01, de préférence
1:0,2 à 1:0,05,

ledit ester ou mélange d'esters de l'acide borique étant soluble ou étant dissous dans le solvant organique ou le mélange de solvants organiques.

2. Agent ou concentré pour la conservation du bois et des matériaux en bois suivant la revendication 1 caractérisé en ce qu'il contient, comme ester organique de l'acide borique, du borate de tri-m,p-crésyle, du borate de triphényle, du borate de triéthyle, du borate de tributyle, du borate de tripropyle, du biborate de trihexylèneglycol, du 2,2'(1-méthyltriméthylène-dioxy)bis-(4-méthyl-1,3,2-dioxaborinane) et/ou du 2,2'-oxybis(4,4,6-triméthyl-1,3,2-dioxaborinane).

3. Agent pour la conservation du bois et des matériaux en bois suivant les revendications 1 à 2 caractérisé en ce qu'il contient

0,1—5% en poids

d'au moins un biocide de la classe des carbamates, des esters de l'acide phosphorique, des esters de l'acide dithiophosphorique, des esters de l'acide thiophosphorique, des esters de l'acide thionophophorique, de leurs dérivés et de leurs, mélanges entre eux ou avec un ou plusieurs autres biocides organiques ou métallo-organiques et

plus de 45% en poids

d'un solvant organique ou mélange de solvants organiques, de préférence un solvant organique ou mélange de solvants organiques peut volatil ayant un point d'éclair supérieur à 30°C, ainsi qu'éventuellement au moins un agent actif fongicide et/ou insecticide, une résine, une résine synthétique, un agent de fixation et/ou un plastifiant, un additif et/ou un adjuvant de traitement, ainsi que, par rapport à la teneur totale en biocides de la classe des carbamates, des esters de l'acide phosphorique, des esters de l'acide thiophosphorique, des esters de l'acide dithiophosphorique, des esters de l'acide thionophosphorique et des dérivés biocides de ceux-ci, au moins un ester organique de l'acide borique, soluble dans le solvant organique ou le mélange de solvants organiques, en un rapport pondéral de

1:0,5 à 1:0,01, de préférence
1:0,2 à 1:0,05,

et

0 à 8% en poids, de préférence
0,1 à 5% en poids,

d'un fongicide ou mélange de fongicides soluble dans le solvant organique ou le mélange de solvants

9

organiques, de préférence l'amide de l'acide N,N-diméthyl-N'-phényl-N'-(fluordichlorméthylthio) sulfonique, l'amide de l'acide N,N-diméthyl-N'-tolyl-N'-(dichlorfluorméthylthio) sulfonique, l'amide de l'acide N-cyclohexyl-N-méthoxy-2,5-diméthylfuranne-3-carboxylique, le tris(N-cyclohexyl-diazéniumdioxy)-aluminium et/ou des composés organiques de l'étain fongicides.

4. Agent pour la conservation du bois et des matériaux en bois suivant une ou plusieurs des revendications 1 à 3, caractérisé en ce qu'il contient

0,1—12% en poids, de préférence
1—6% en poids,

d'au moins un agent de fixation, un plastifiant et/ou une résine synthétique soluble dans l'huile, de préférence une résine alkyde et/ou une huile siccative végétale.

5. Concentré suivant une ou plusieurs des revendications 1 à 4, caractérisé en ce que le concentré pour la conservation du bois et des matériaux en bois contient

5—35% en poids

d'au moins un biocide de la classe des carbamates, des esters de l'acide phosphorique, des esters de l'acide dithiophosphorique, des esters de l'acide thiophosphorique, des esters de l'acide thionophosphorique, de leurs dérivés et de leurs mélanges entre eux ou avec un ou plusieurs autres biocides organiques ou métallo-organiques et

plus de 45% en poids

d'un solvant organique ou d'un mélange de solvants organiques, de préférence un solvant organique ou mélange de solvants organiques peu volatil, ayant un point d'éclair supérieur à 30°C, ainsi qu'éventuellement au moins un agent actif fongicide et/ou insecticide, une résine, une résine synthétique, un agent de fixation et/ou un plastifiant, un additif et/ou un adjuvant de traitement ainsi que, par rapport à la teneur totale en biocide de la classe des carbamates, des esters de l'acide phosphorique, des esters de l'acide thiophosphorique, des esters de l'acide dithiophosphorique, des esters de l'acide thionophosphorique et des dérivés biocides de ceux-ci, au moins un ester organique de l'acide borique soluble dans le solvant organique ou le mélange de solvants organiques, en un rapport pondéral de

1:0,5 à 1:0,01 de préférence
1:0,2 à 1:0,05,
et

35—0% en poids, en préférence
30—5% en poids,

d'un fongicide ou mélange de fongicides soluble dans le solvant organique ou le mélange de solvants organiques, de préférence l'amide d'acide N,N-diméthyl-N'-phényl-N'-(fluordichlorméthylthio) sulfonique, l'amide d'acide N,N-diméthyl-N'-tolyl-N'-(dichlorfluorméthylthio) sulfonique, l'amide d'acide N-cyclohexyl-N-méthoxy-2,5-diméthylfuranne-3-carboxylique, le tris(N-cyclohexyl-diazéniumdioxy)-aluminium et/ou les composés organiques de l'étain fongicides.

6. Procédé de fabrication de l'agent ou du concentré pour la conservation du bois et des matériaux en bois par mélange des constituants selon les revendications 1 à 5 caractérisé en ce que le biocide ou le mélange de biocides, qui consiste en au moins un biocide de la classe des carbamates, des esters de l'acide phosphorique, des esters de l'acide dithiophosphorique, des esters de l'acide thiophosphorique, des esters de l'acide thionophosphorique, des dérivés de ceux-ci ou de leurs mélanges entre eux ou avec un ou plusieurs autres biocides organiques ou métallo-organiques, et un solvant organique ou un mélange de solvants organiques, de préférence un solvant organique ou mélange de solvants organiques peu volatil, ayant un point d'éclair supérieur à 30°C, ainsi qu'au moins un ester organique de l'acide borique sont traités sous agitation, à des températures situées entre

283 K et 343 K, de préférence
293 K et 323 K,

et sous des pressions comprise entre

53,32 kPa et 113,32 kPa, de préférence
79,99 kPa et 105,32 kPa,

en présence ou en l'absence des autres substances ou des constituants de ces substances, jusqu'à l'obtention d'une solution, les autres substances étant ajoutées ultérieurement à la solution.

7. Procédé de fabrication de l'agent ou du concentré pour la conservation du bois et des matériau en bois suivant la revendication 6 caractérisé en ce que le solvant organique ou le mélange de solvants organiques, de préférence un solvant organique ou mélange de solvants organiques peu volatil, ayant un point d'éclair supérieur à 30°C, est traité sous agitation, simultanément avec au moins un ester organique de l'acide borique, à des températures situées entre

283 K et 343 K, de préférence
293 K et 323 K,

et sous des pressions comprises entre

53,32 kPa et 113,32 kPa, de préférence
79,99 kPa et 105,32 kPa,

en présence ou en l'absence des autres substances ou constituants de ces substances, jusqu'à l'obtention d'une solution, on ajoute le liant de résine ou le liant de résine synthétique, le plastifiant et/ou l'agent de fixation tout en agitant, puis on ajoute sous agitation, à des températures situées entre

283 K et 333 K, de préférence
290 K et 320 K,

les biocides et éventuellement d'autres agents actifs, ainsi que les additifs et/ou l'adjuvant de traitement.

**Claims**

1. Agent or concentrate for preserving wood and timber materials containing

0.1—40% by weight

of at least one biocidal carbamate, phosphoric acid ester, dithiophosphoric acid ester, thiophosphoric acid ester, thionophosphoric acid ester or one of their derivatives or mixtures of one or more of these biocides with each other or with one or more other organic or organometallic biocides and

more than 45% by weight

of an organic-chemical solvent or organic-chemical solvent mixture, preferably an organic-chemical, difficult to volatilise solvent or solvent mixture having a flashpoint above 30°C, and optionally at least one other fungicide and/or insecticide, at least one resin, artificial resin, fixing agent and/or softener, an additive and/or an auxiliary processing agent, characterised in that the wood protection agent relative to the total biocidal content of carbamate, phosphoric acid ester, thiophosphoric acid ester, dithiophosphoric acid ester, thionophosphoric acid ester or a biocidal derivative thereof, contains at least one organic boric acid ester in a weight ratio of

1:0.5 to 1:0.01, preferably
1:0.2 to 1:0.05

the boric acid ester or the boric acid ester mixture being soluble or dissolved in the organic-chemical solvent or solvent mixture.

2. Agent or concentrate for preserving wood and timber materials according to Claim 1, characterised in that tri-m,p-cresylborate, triphenylborate, triethylborate, tributylborate, tripropylborate, trihexyleneglycolbiborate, 2,2'(1-methyltrimethylenedioxy)bis-(4-methyl-1,3,2-dioxaborinane) and/or 2,2'-oxy-bis(4,4,6-trimethyl-1,3,2-dioxaborinane) are contained in the preservation agent as organic boric acid ester.

3. Agent for preserving wood and timber materials according to Claims 1 to 2, characterised in that the agent for preserving wood and timber materials contains

0.1—5% by weight

of at least one biocidal carbamate, phosphoric acid ester, dithiophosphoric acid ester, thiophosphoric acid ester, thionophosphoric acid ester or one of their derivatives or mixtures of one or more of these biocides with each other or with one or more other organic or organometallic biocides and

more than 45% by weight

of an organic-chemical solvent or organic-chemical solvent mixture, preferably an organic-chemical, difficult to volatilise solvent or solvent mixture having a flashpoint above 30°C, and also optionally at least one fungicide and/or insecticide, a resin, artificial resin, fixing agent and/or a softener, an additive and/or an auxiliary processing agent, and also, relative to the total biocidal content of carbamate, phosphoric acid ester, thiophosphoric acid ester, dithiophosphoric acid ester, thionophosphoric acid ester or a biocidal derivative thereof, at least one organic boric acid ester which is soluble in the organic-chemical solvent or solvent mixture in a weight ratio of

1:0.5 to 1:0.01, preferably
1:0.2 to 1:0.05,

and

0 to 8% by weight, preferably
0.1 to 5% by weight,

of a fungicide or fungicide mixture soluble in the organic-chemical solvent or solvent mixture, preferably N,N-dimethyl-N'-phenyl-N'-(fluorodichloromethylthio)sulphamide,     N,N-dimethyl-N'-tolyl-N'-(dichloro-fluoromethylthio)sulphamide, N-cyclohexyl-N-methoxy-2,5-dimethylfuran-3-carboxylic acid amide, tris(N-cyclohexyl-diazenium-dioxi)-aluminium and/or fungicidal tin-organic compounds.

4. Agent for preserving wood and timber materials according to one or more of Claims 1 to 3, characterised in that the preservation agent contains

0.1—12% by weight, preferably
1—6% by weight,

of at least one fixing agent, softener and/or oil-soluble artificial resin, preferably alkyd resin and/or drying vegetable oil.

5. Concentrate according to one or more of Claims 1 to 4, characterised in that the concentrate for preserving wood and timber materials contains

5—35% by weight

of at least one biocidal carbamate, phosphoric acid ester, dithiophosphoric acid ester, thiophosphoric acid ester, thionophosphoric acid ester or one of their derivatives or mixtures of one or more of these biocides with each other or with one or more other organic or organometallic biocides and

more than 45% by weight

of an organic-chemical solvent or organic-chemical solvent mixture, preferably an organic-chemical, difficult to volatilise solvent or solvent mixture having a flashpoint above 30°C, and also optionally at least one fungicide and/or insecticide, a resin, artificial resin, fixing agent and/or a softener, an additive and/or an auxiliary processing agent, and also, relative to the total biocidal content of carbamate, phosphoric acid ester, thiophosphoric acid ester, dithiophosphoric acid ester, thionophosphoric acid ester or a biocidal derivative thereof, at least one organic boric acid ester which is soluble in the organic-chemical solvent or solvent mixture in a weight ratio of

1:0.5 to 1:0.01, preferably
1:0.2 to 1:0.05,

and

35 to 0% by weight, preferably
30 to 5% by weight,

of a fungicide or fungicide mixture soluble in the organic-chemical solvent or solvent mixture, preferably N,N-dimethyl-N'-phenyl-N'-(fluorodichloromethylthio)sulphamide,     N,N-dimethyl-N'-tolyl-N'-(dichloro-fluoromethylthio)sulphamide, N-cyclohexyl-N-methoxy-2,5-dimethylfuran-3-carboxylic acid amide, tris(N-cyclohexyl-diazenium-dioxi)-aluminium and/or fungicidal tin-organic compounds.

6. Method for the production of the agent or concentrate for preserving wood and timber materials by mixing the constituents according to Claims 1—5, characterised in that the biocide or biocide mixture consisting of at least one biocidal carbamate, phosphoric acid ester, dithiophosphoric acid ester, thiophosphoric acid ester, thionophosphoric acid ester or one of their derivatives or mixtures of one or more of these biocides with each other or with one or more other organic or organometallic biocides and an organic-chemical solvent or organic-chemical solvent mixture, preferably an organic-chemical, difficult to volatilise solvent or solvent mixture having a flashpoint above 30°C, together with at least one organic boric acid ester, are treated, with stirring, at temperatures of

283 K to 343 K, preferably
293 K to 323 K,

and at pressures of

12

53.32 kPa to 113.32 kPa, preferably
79.99 kPa to 105.32 kPa,

in the presence or in the absence of the other substances or constituents of these substances, until a solution is produced, with the other substances subsequently being added to the solution.

7. Method for the production of the agent or concentrate for preserving wood and timber materials according to Claim 6, characterised in that the organic-chemical solvent or organic-chemical solvent mixture, preferably an organic-chemical, difficult to volatilise solvent or solvent mixture having a flashpoint above 30°C, together with at least one organic boric acid ester, are treated, with stirring, at temperatures of

283 K to 343 K, preferably
293 K to 323 K,

and at pressures of

53.32 kPa to 113.32 kPa, preferably
79.99 kPa to 105.32 kPa,

in the presence or in the absence of the other substances or constituents of these substances, until a solution is produced, and resin binding agents, artificial resin binding agents, softeners and/or fixing agents are added, with stirring, and then the biocides and optionally other active substances and also additives and/or auxiliary processing agents are added, with stirring, at temperatures of

283 K to 333 K, preferably
290 K to 320 K.